# FASCICULE DE BREVET EUROPEEN

(11) **EP 4 154 559 B1**
(45) Date de publication et mention de la délivrance du brevet: **02.12.2026**
(21) Numéro de dépôt: 21732449.0
(22) Date de dépôt: 12.05.2021
(51) Int. Cl.: H04W 4/20, H04W 4/12, H04W 4/00, H04L 51/18, H04L 67/55, H04W 12/00

(54) **PROCEDE DE NOTIFICATION D'UN TERMINAL MOBILE**
VERFAHREN ZUR BENACHRICHTIGUNG EINES MOBILEN ENDGERÄTES
METHOD FOR NOTIFYING A MOBILE TERMINAL

(30) Priorité: 19.05.2020 FR 2005091
(43) Date de publication de la demande: 29.03.2023
(73) Titulaire: Orange, 92130 Issy-les-Moulineaux (FR)
(72) Inventeur: BOUVET, Bertrand, 92326 CHÂTILLON CEDEX (FR)
(86) Numéro de dépôt international: PCT/FR2021/050829
(87) Numéro de publication internationale: WO 2021/234250

(56) Documents cités:
- EP-A1- 2 584 736
- US-A1- 2015 024 793

## Description

### 1. Domaine de l'invention

L'invention se rapporte au domaine général des réseaux de télécommunications, et plus particulièrement aux terminaux mobiles.

### 2. Art Antérieur

La majorité des systèmes d'exploitation utilisés par les terminaux mobiles (Apple IOS, Google Android,...) fournissent nativement des moyens pour recevoir, depuis une plateforme de services du fournisseur du système d'exploitation et accessible depuis le réseau Internet, des notifications (APNS pour le système d'exploitation IOS d'Apple, GCM/FCM pour le système d'exploitation Android de Google) destinées aux applications présentes sur les terminaux. Ces notifications permettent par exemple de « réveiller » une application lorsque celle-ci n'est pas en cours d'exécution ou de lui fournir de l'information en quasi temps réel lorsqu'elle est exécutée en arrière-plan. Une fois la ou les notifications reçues, l'application a la possibilité d'informer l'utilisateur, via une interface homme-machine du terminal mobile, du contenu de la notification (appel entrant, demande de saisie de code lors de transaction bancaire, etc.).

Le fonctionnement d'un tel service repose sur la déclaration d'un compte utilisateur au niveau du terminal mobile permettant l'utilisation par celui-ci d'une plateforme de services du fournisseur du système d'exploitation. Une fois le compte déclaré, un canal de communication sécurisé et permanent est établi entre le système d'exploitation et/ou une application du fournisseur du système d'exploitation présente sur le terminal (par exemple l'application Google Play pour Android) et la plateforme de services du fournisseur du système d'exploitation. Ce canal de communication permet par exemple d'informer la plateforme de services du fournisseur du système d'exploitation d'un changement d'adresse IP Internet de l'interface réseau du terminal mobile, d'informer le terminal mobile de la disponibilité d'une mise à jour du système d'exploitation et/ou des applications et de transmette aux applications présentes sur le terminal des notifications par exemple en provenance de serveurs applicatifs.

Lorsque l'utilisateur télécharge sur son terminal mobile une application depuis la plateforme de services du fournisseur du système d'exploitation, celle-ci génère et mémorise dans un profil de l'utilisateur un identifiant unique de l'application téléchargée sur le terminal. Suite à son lancement, l'application récupère l'identifiant unique depuis la plateforme de services du fournisseur du système d'exploitation et le transmet aux serveurs applicatifs qui lui fournissent tout ou partie des informations/services proposés à l'utilisateur. Ainsi, lorsque l'un des serveurs applicatifs souhaite envoyer une notification à l'application, il va transmettre à la plateforme de services du fournisseur du système d'exploitation les différentes informations à envoyer plus l'identifiant unique de l'application récupéré au préalable.

Ce mécanisme de notifications mis en place par les fournisseurs de systèmes d'exploitation mobile est essentiel et n'a pas d'alternative connue pour garantir une bonne expérience utilisateur au niveau des applications mobiles. Ce mécanisme permet également une optimisation de la consommation électrique du terminal mobile et de la bande passante réseau. En effet, il n'est alors pas nécessaire à une application, d'émettre régulièrement des requêtes auprès d'une plateforme applicative située dans le réseau pour récupérer par exemple des messages ou des informations destinées à l'utilisateur de l'application. Le terminal et les applications seront « réveillés » lorsque cela est nécessaire.

Cependant, ce système de notification s'appuie sur la disponibilité d'une connectivité IP Internet du terminal. Par conséquent, dans le cas où l'utilisateur désactive les données cellulaires de son terminal et qu'il n'y a aucune autre connectivité disponible telle que le WiFi, le canal de communication permanent entre le terminal et la plateforme de services du fournisseur du système d'exploitation devient inopérant. En outre, ce système nécessite d'une part des ingénieries particulières dans les équipements IP des opérateurs de télécommunications afin de maintenir ce canal de communication permanent et d'autre part un débit minimum de données lorsque le quota de données autorisé lié à l'abonnement a été atteint.

Il existe également une fragmentation des solutions de notifications en fonction des fournisseurs de système d'exploitation mobile, chacun d'eux proposant sa propre solution non compatible avec les autres solutions du marché. Cela implique pour les fournisseurs des serveurs applicatifs la mise en œuvre de l'ensemble des solutions de notifications de façon à fournir la même expérience utilisateur à tous les utilisateurs quel que soit le type de terminal mobile détenu.

En outre, la plateforme de services du fournisseur du système d'exploitation peut accéder à des données potentiellement sensibles contenues dans les notifications ce qui peut poser un problème concernant la protection des données à caractère personnel. En effet, un acteur malveillant qui proposerait un tel service pourrait par exemple récupérer des données des utilisateurs et les revendre sans que les utilisateurs en aient conscience.

De manière générale, l'utilisation de ces plateformes de services engendre également une augmentation du trafic IP international, ces plateformes sont pour la plupart hébergées aux Etats-Unis, ce qui peut impliquer l'utilisation d'un grand nombre d'équipements réseaux pour acheminer les notifications vers les terminaux des utilisateurs non-résidents aux Etats-Unis avec un impact énergétique et donc environnemental important.

De plus, il n'existe pas de solution alternative à de telles solutions. Concrètement, si la plateforme de services d'un fournisseur de système d'exploitation mobile est inaccessible, par exemple à la suite d'un problème de mise à jour, les applications mobiles qui utilisent le système de notifications perdent tout ou partie de leurs fonctionnalités.

D'autres documents de l'état de la technique décrivant des méthodes de notification sont les suivants US 2015024793, EP 2584736.

### 3. Exposé de l'invention

L'invention vient améliorer l'état de la technique et propose à cet effet un procédé de transmission d'une notification à destination d'une application d'un terminal mobile, ledit terminal mobile disposant d'un élément matériel sécurisé permettant l'authentification dudit terminal mobile au niveau d'un réseau de télécommunication, le procédé étant caractérisé en ce qu'il comprend :
- une étape de réception de ladite notification en provenance d'un serveur applicatif, ladite notification comprenant au moins un identifiant dudit terminal mobile et au moins un identifiant de ladite application ;
- une étape d'obtention, en fonction dudit au moins un identifiant dudit terminal mobile, d'au moins une donnée de connectivité ;
- une étape de détermination, en fonction de ladite au moins une donnée de connectivité obtenue, d'un paramètre d'accès à au moins un dispositif de communication apte à communiquer avec ledit terminal mobile ;
- une étape de transmission de ladite notification audit dispositif de communication accessible via ledit paramètre d'accès.

Avantageusement, le procédé de transmission selon l'invention permet, lorsqu'un service souhaite notifier une application mobile, de transmettre la notification via un dispositif de communication apte à communiquer avec le terminal mobile qui exécute l'application mobile destinataire de la notification. Le dispositif de communication est déterminé en fonction d'une donnée de connectivité elle-même obtenue en fonction d'un identifiant du terminal mobile.

Concrètement, le procédé va par exemple pour un terminal mobile donné, obtenir des données de connectivités du terminal mobile en fonction par exemple du MSISDN (Mobile Station International Subscriber Device Number) contenu dans la notification. Le procédé va ensuite traiter ces données de connectivité et en déduire la connectivité à utiliser comme par exemple le SMS (Short Message Service), l'USSD (Unstructured Supplementary Service Data), une communication téléphonique, etc. pour communiquer avec le terminal mobile. Un dispositif de communication compatible avec la connectivité choisie par le dispositif et un paramètre d'accès associé sont alors déterminés par le procédé. La notification est ensuite envoyée au terminal mobile et à l'application destinataire via le dispositif de communication.

A noter qu'il est possible d'utiliser, lors de l'étape d'obtention, un second identifiant du terminal par exemple obtenu via une base de données en fonction de l'identifiant compris dans la notification. Ainsi, un identifiant du terminal mobile destinataire tel qu'un MSISDN contenu dans la notification peut par exemple permettre l'obtention par l'opérateur téléphonique ayant en charge ce MSISDN d'une adresse MAC (Media Access Control) du terminal mobile qui sera ensuite utilisée pour obtenir une donnée de connectivité du terminal mobile.

On entend par élément matériel sécurisé, tout élément matériel interne au terminal mobile apte à fournir un environnement sécurisé comme par exemple un eSE (embeded Secure Element), un TEE (Trusted Execution Environment) ou bien un support amovible géré par le terminal mobile comme par exemple une carte d'abonné de type SIM/eSIM (Subscriber Identification Module)/eSIM (Embedded Subscriber Identification Module), une UICC (pour "Universal Integrated Circuit Card"), une carte à mémoire ou encore un terminal/support externe connecté au terminal mobile via un lien sécurisé. Cet élément sécurisé est par exemple utilisé pour stocker les informations nécessaires permettant l'authentification du terminal mobile et/ou de son propriétaire auprès d'un réseau d'un opérateur de télécommunication mobile.

On entend par application, un logiciel informatique développé pour être exécuté sur un terminal mobile tel qu'un téléphone, un ordinateur portable, un objet connecté, un véhicule connecté, une tablette, etc. L'application mobile peut également être une applet de type JavaCard ou Cardlet apte à être exécutée sur une UICC/eSE/SIM/etc.

On entend par paramètre d'accès, un paramètre qui va permettre d'accéder et d'établir la communication avec un dispositif de communication tel qu'une adresse de messagerie, une adresse IP, une adresse MAC, un FQDN (Fully Qualified Domain Name), Etc.

On entend par donnée de connectivité, une donnée permettant de connaitre tout ou partie des connectivités disponibles sur un équipement informatique tels que le Bluetooth, WiFi, LiFi, LoRa, cellulaire (5G/4G/4G/2G), une adresse IP et leurs états (active ou non active).

On entend par identifiant de terminal, une suite de caractères et/ou de données binaires qui sert à identifier un terminal tel qu'un numéro de téléphone (MSISDN), une adresse de messagerie, une adresse IP, une adresse MAC, un IMEI, un IMSI, un TEID (Terminal End Point Identifier), un Token (jeton permettant l'identification et/ou l'authentification du terminal), etc.

On entend par identifiant d'une application, une suite de caractères et/ou de données binaires comme par exemple un Token qui permet d'identifier une application et/ou un contenu et/ou une action interprétable par une application sur un terminal mobile.

Selon un mode de mise en œuvre particulier de l'invention, un procédé tel que décrit ci-dessus est caractérisé en ce que l'étape de transmission comprend une sous étape de routage de ladite notification par ledit dispositif de communication vers ladite application dudit terminal mobile identifié via ledit au moins un identifiant dudit terminal mobile.

Ce mode de mise en œuvre de l'invention permet d'identifier un terminal mobile parmi une pluralité de terminaux et de lui transmettre la notification. Le terminal est identifié via un, plusieurs, ou une combinaison de ses identifiants. On entend par routage, la capacité à aiguiller/envoyer/transférer une notification vers le terminal mobile destinataire.

Selon un mode de mise en œuvre particulier de l'invention, un procédé tel que décrit ci-dessus est caractérisé en ce que l'étape d'obtention est également fonction dudit identifiant de ladite application.

Ce mode de mise en œuvre de l'invention permet de choisir une connectivité parmi une pluralité de connectivités disponibles sur un terminal mobile en fonction de l'application destinataire de la notification. Cela permet par exemple de choisir la connectivité la plus adaptée pour la transmission de la notification comme par exemple la plus rapide ou la moins énergivore.

Selon un mode de mise en œuvre particulier de l'invention, un procédé tel que décrit ci-dessus est caractérisé en ce que l'étape de réception est suivi d'une étape de stockage de ladite notification.

Ce mode de mise en œuvre de l'invention permet par exemple de mémoriser dans une mémoire accessible depuis le procédé de transmission, la notification reçue avec son contenu. Les informations ainsi sauvegardées/mémorisées peuvent être ensuite restituées à l'application par exemple à la suite d'une requête émise par l'application.

Selon un mode de mise en œuvre particulier de l'invention, un procédé tel que décrit ci-dessus est caractérisé en ce que ladite au moins une donnée de connectivité comprend le statut de connexion d'au moins une interface de communication dudit terminal mobile à un instant donnée.

Ce mode de mise en œuvre de l'invention permet de choisir un dispositif de communication et un paramètre pour y accéder en fonction d'un statut de connexion, par exemple actif ou non actif, d'une interface/service de communication du terminal mobile à un instant donné. Ainsi, il est possible de s'assurer que le terminal mobile a bien une interface/service de communication actif avant de le lui transmettre la notification via un dispositif de communication adapté.

Selon un mode de mise en œuvre particulier de l'invention, un procédé tel que décrit ci-dessus est caractérisé en ce que ladite au moins une donnée de connectivité comprend un indicateur de priorité associé à ladite au moins une interface de communication dudit terminal mobile.

Ce mode de mise en œuvre permet de choisir l'interface ou le service de communication à utiliser parmi une pluralité d'interfaces/services de communication actifs à un instant donné via par exemple un classement (ordre de préférence) ou une pondération associée à chaque interface/service de communication.

Selon un mode de mise en œuvre particulier de l'invention, un procédé tel que décrit ci-dessus est caractérisé en ce que ladite au moins une donnée de connectivité comprend un indicateur de qualité associé à ladite au moins une interface de communication dudit terminal mobile.

Ce mode de mise en œuvre permet de choisir l'interface ou le service de communication à utiliser parmi une pluralité d'interfaces/services de communication actifs à un instant donné en fonction d'un indicateur de qualité comme par exemple la qualité de la réception radio constatée au niveau de l'interface/service de communication du terminal mobile.

Selon un mode de mise en œuvre particulier de l'invention, un procédé tel que décrit ci-dessus est caractérisé en ce que l'étape de détermination est également fonction d'une donnée de droits d'accès associée à l'élément matériel sécurisé.

Ce mode de mise en œuvre permet de choisir un dispositif de communication parmi une pluralité de dispositifs de communication en fonction de droits d'accès par exemple attribués par un opérateur de télécommunications au détenteur du terminal mobile. En effet, l'offre commerciale (abonnement) fournie par l'opérateur de télécommunications au détenteur du terminal mobile et associée à l'élément de sécurité peut comprendre des restrictions d'accès pour le terminal mobile à un ou plusieurs dispositifs de communication comme par exemple des plateformes de type SMS/MMS/USSD/de téléphonie/etc. Les restrictions peuvent être temporaires, par exemple liées à une plage horaire ou à un quota de données échangées, ou bien totales si l'abonnement ne prévoit pas la possibilité d'utiliser une plateforme en particulier.

Selon un mode de mise en œuvre particulier de l'invention, un procédé tel que décrit ci-dessus est caractérisé en ce que ladite au moins une donnée de connectivité comprend le statut de connexion d'au moins un serveur situé dans le réseau.

Ce mode de mise en œuvre de l'invention permet de choisir un dispositif de communication et un paramètre pour y accéder en fonction d'un statut de connexion, par exemple actif ou non actif, d'une interface de communication d'un serveur situé dans le réseau. Ainsi, il est possible de s'assurer que le serveur est bien connecté/accessible avant de lui transmettre la notification via un dispositif de communication adapté. Cela permet par exemple de prendre en compte les codes d'erreur renvoyés par le serveur ou la non-réponse dans un délai donné.

L'invention vise également un procédé de réception d'une notification, mise en œuvre par un terminal mobile, ladite notification étant à destination d'une application dite de services dudit terminal mobile, le procédé étant caractérisé en ce qu'il comprend :
- une étape de réception de ladite notification en provenance d'un dispositif de communication par une application dite opérateur, ladite notification comprenant au moins un identifiant de ladite application de services ;
- une étape de réveil de ladite application de services via un message émis par ladite application opérateur ;
- une étape de transmission de ladite notification à ladite application de services.

Avantageusement, le procédé de réception selon l'invention permet de réceptionner, sur un terminal mobile, la notification transmise depuis un dispositif de communication. Une fois réceptionnée, la notification est ensuite transmise à l'application de services destinataire.

On entend par application opérateur, une application apte à être réveillée grâce à un message de signalisation reçu au niveau d'une interface/service de communication radio du terminal mobile.

Selon un mode de mise en œuvre particulier de l'invention, un procédé de réception tel que décrit ci-dessus est caractérisé en ce que ledit identifiant de ladite application de services comprend un lien permettant d'accéder à un contenu spécifique de ladite application.

Ce mode de mise en œuvre de l'invention permet par exemple de notifier l'application de services qu'un contenu particulier doit être restitué à l'utilisateur.

Selon un mode de mise en œuvre particulier de l'invention, un procédé de réception tel que décrit ci-dessus est caractérisé en ce que ledit identifiant de ladite application de services comprend un lien permettant le téléchargement par ladite application de services d'au moins une information depuis un serveur situé dans le réseau.

Ce mode de mise en œuvre de l'invention permet de notifier l'application de services qu'un contenu particulier est par exemple téléchargeable depuis un serveur situé dans le réseau. Le lien peut par exemple comprendre un identifiant de la notification permettant d'identifier le contenu à télécharger.

On entend par identifiant d'une notification une suite de caractères et/ou de données binaires qui sert à identifier de façon unique ou non une notification. L'identifiant peut par exemple être le même pour plusieurs notifications et correspondre à une catégorie de notification permettant le déclenchement d'un traitement particulier au niveau du terminal mobile.

L'invention concerne également un dispositif de transmission d'une notification à destination d'une application d'un terminal mobile, ledit terminal mobile disposant d'un élément matériel sécurisé permettant l'authentification dudit terminal mobile au niveau d'un réseau de télécommunication, ledit dispositif étant caractérisé en ce qu'il comprend :
- un module de réception de ladite notification en provenance d'un serveur applicatif, ladite notification comprenant au moins un identifiant dudit terminal mobile et au moins un identifiant de ladite application ;
- un module d'obtention, en fonction dudit premier identifiant dudit terminal mobile, d'au moins une donnée de connectivité ;
- un module de détermination, en fonction de ladite au moins une donnée de connectivité obtenue, d'un paramètre d'accès à au moins un dispositif de communication apte à communiquer avec ledit terminal mobile ;
- un module de transmission de ladite notification audit dispositif de communication via ledit paramètre d'accès déterminé.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un mode de mise en œuvre particulier de l'invention, un dispositif de transmission tel que décrit ci-dessus est caractérisé en ce qu'il inclut ledit dispositif de communication.

L'invention concerne également un serveur comprenant un dispositif de transmission tel que décrit ci-dessus.

L'invention concerne également un système de transmission d'une notification à destination d'une application d'un terminal mobile, ledit terminal mobile disposant d'un élément matériel sécurisé permettant l'authentification dudit terminal mobile au niveau d'un réseau de télécommunication caractérisé en ce qu'il comprend :
- un premier dispositif comprenant des moyens pour recevoir ladite notification en provenance d'un serveur applicatif, ladite notification comprenant au moins un identifiant dudit terminal mobile et au moins un identifiant de ladite application, obtenir au moins une donnée de connectivité en fonction dudit identifiant dudit terminal mobile, déterminer un paramètre d'accès pour accéder à au moins un dispositif de communication en fonction de ladite au moins une donnée de connectivité obtenue et transmettre ladite notification audit dispositif de communication ;
- un deuxième dispositif, dit dispositif de communication, accessible via ledit paramètre d'accès comprenant des moyens pour recevoir ladite notification et la router vers ledit terminal mobile en fonction dudit au moins un identifiant dudit terminal mobile.

Selon un mode de mise en œuvre particulier de l'invention, un système tel que décrit ci-dessus est caractérisé en ce que ledit dispositif de communication comprend un serveur d'un opérateur de télécommunication apte à communiquer avec ledit terminal mobile.

On entend par serveur d'un opérateur de télécommunication, un serveur opéré par un opérateur qui fournit un service de communication mobile au détenteur du terminal mobile. C'est-à-dire l'opérateur propriétaire de l'élément matériel sécurisé et/ou des données qui y sont stockées (profil) permettant au terminal mobile de pouvoir s'authentifier au niveau du réseau et des plateformes afin d'obtenir les services de communications.

Le serveur peut par exemple comprendre un serveur du type GGSN (Gateway GPRS Support Node) et/ou PGW (Packet GateWay) et/ou SMF (Session Management Function) et/ou UPF (User Plane Function) et/ou SMS-C (Short Message Service Center) et/ou IP-SM-GW (IP Short Message GateWay) et/ou MMS-C (Multimedia Message Service Center) et/ou serveur USSD/USSI (Unstructured Supplementary Service Data / Unstructured Supplementary Service over IP) et/ou MSC (Mobile Switch Center) et/ou téléphonique TAS (Telephony Application Server) d'un réseau IMS (IP Multimedia subsystem) et/ou RCS (Rich Communication Suite) et/ou de gestion des attachements des terminaux mobiles au réseau MME (Mobility Management Entity) et/ou AMF (Access and Mobility Management), etc.

L'invention concerne également un système de gestion d'une notification, ladite notification étant à destination d'une application d'un terminal mobile caractérisé en ce qu'il comprend :
- un premier dispositif comprenant des moyens pour émettre ladite notification, celle-ci comprenant au moins un premier identifiant dudit terminal mobile, au moins un identifiant de ladite application ;
- un deuxième dispositif comprenant des moyens pour recevoir ladite notification en provenance d'un serveur applicatif, ladite notification comprenant au moins un identifiant dudit terminal mobile et au moins un identifiant de ladite application, obtenir au moins une donnée de connectivité en fonction dudit identifiant dudit terminal mobile, déterminer un paramètre d'accès pour accéder à au moins un dispositif de communication en fonction de ladite au moins une donnée de connectivité obtenue et transmettre ladite notification audit dispositif de communication ;

- un troisième dispositif, dit dispositif de communication, accessible via ledit paramètre d'accès comprenant des moyens pour recevoir ladite notification et la router vers ledit terminal mobile en fonction dudit au moins un identifiant dudit terminal mobile.
- un terminal comprenant des moyens pour recevoir ladite notification en provenance dudit dispositif de communication et réveiller ladite application identifiée via ledit au moins un identifiant de ladite application.

L'invention concerne également un programme d'ordinateur comportant des instructions pour la mise en œuvre du procédé ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif de transmission et ce système de transmission ainsi que ce programme d'ordinateur présentent des caractéristiques et avantages analogues à ceux décrits précédemment en relation avec les procédés de transmission et de réception.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en œuvre selon un mode particulier de réalisation de l'invention,
[Fig 2] La figure 2 illustre l'architecture matérielle d'un dispositif configuré pour mettre en œuvre le procédé de transmission d'une notification selon un mode particulier de réalisation de l'invention,
[Fig 3] La figure 3 illustre des étapes du procédé de transmission d'une notification selon un mode particulier de réalisation de l'invention.

### 5. Description d'un mode de réalisation de l'invention

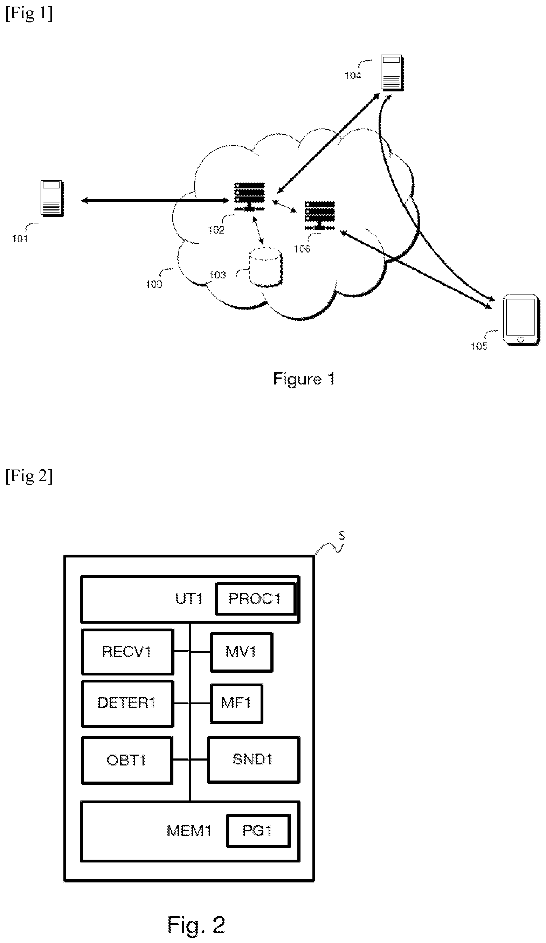

La figure 1 illustre un exemple d'environnement de mise en œuvre de l'invention selon un mode particulier de réalisation de l'invention. L'environnement de mise en œuvre comprend un terminal 105 adapté pour établir des communications avec un serveur 106 situé dans le réseau d'un opérateur de télécommunications 100 ou un serveur 104 d'un tiers accessible depuis le réseau de communications 100 selon l'état de l'art. Le terminal 105 est par exemple un terminal mobile comprenant un élément de sécurité tel qu'un composant de type iSIM/eSIM/eSE/TEE apte à stocker des informations permettant au terminal de s'authentifier puis de se connecter au réseau 100. A noter que l'élément de sécurité peut également être un support amovible géré par le terminal mobile comme par exemple une carte d'abonné de type SIM/UICC (pour "Universal Integrated Circuit Card"), une encore une carte à mémoire. Le serveur 106 est un serveur apte à établir des communications avec le terminal 105 tel qu'un serveur de type SMS-C, IP-SM-GW, MMS-C, serveur USSD/USSI, MSC, PGW, SMF, UPF, GGSN, TAS, RCS, MME, AMF, etc.

L'environnement de mise en œuvre comprend également un serveur applicatif 101, accessible depuis le réseau de communication 100, apte à émettre des notifications à destination d'une application exécutée sur le terminal 105 ou sur l'élément de sécurité. L'application peut être une application de type JavaCard exécutée par exemple sur l'élément de sécurité ou bien une application plus haut niveau exécutée au niveau de l'OS (Operating System) du terminal.

Le serveur 104 est par exemple un serveur opéré par un tiers tel qu'un serveur de notification APNS Apple ou GCM/FCM Google apte à émettre des notifications à destination d'une application exécutée au niveau de l'OS (Operating System) du terminal. Le serveur 102 est un serveur opéré par l'opérateur de télécommunications du réseau de télécommunications 100 apte à communiquer avec les serveurs 101, 104 et 106.

Selon un mode particulier de réalisation de l'invention, l'environnement de mise en œuvre comprend également une base de données 103, accessible depuis le serveur 102 et située au sein du réseau de télécommunications 100, configurée pour stocker des données de connectivité permettant de connaitre tout ou partie des connectivités disponibles au niveau du terminal 105 et/ou du serveur 104 avec leurs états (active / non active /etc.). Chaque donnée de connectivité peut être associée à une ou plusieurs connectivités du terminal 105 ou du serveur 104. La base de données 103 peut également stocker, pour chaque donnée de connectivité un ou plusieurs paramètres d'accès à des dispositifs de communication tels, qu'une adresse IP, une adresse MAC, une URI (Uniform Resource Identifier), un FQDN (Fully Qualified Domain Name) permettant d'accéder et d'établir la communication avec un dispositif de communication tel que le serveur 106.

Selon un mode particulier de réalisation, les serveurs 102 et 106 sont un seul et même serveur.

Selon un mode particulier de réalisation, les serveurs 101 et 102 sont un seul et même serveur. A noter que le serveur comprenant les serveurs 101 et 102 peut être situé au sein du réseau de télécommunications 100 si par exemple ce serveur est opéré par l'opérateur de télécommunications du réseau 100 ou bien en dehors si par exemple ce serveur est un serveur opéré par un agrégateur.

Selon un mode particulier de réalisation, la base de données 103 peut stocker les notifications en provenance du serveur 101.

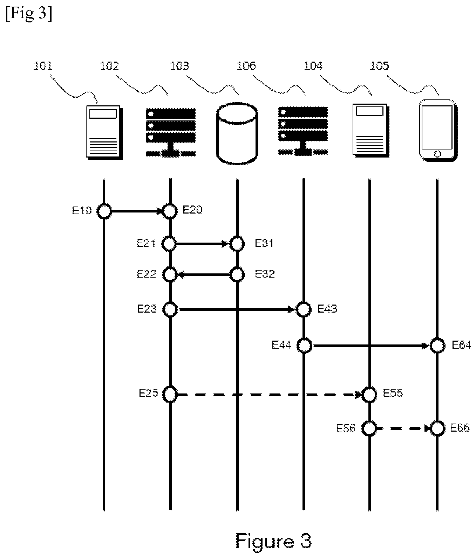

La figure 2 illustre l'architecture matérielle d'un dispositif S configuré pour mettre en œuvre le procédé de transmission d'une notification selon un mode particulier de réalisation de l'invention. Dans le mode de réalisation décrit ici, ce dispositif a l'architecture matérielle d'un ordinateur. Il comprend notamment un processeur PROC1, une mémoire vive MV1, une mémoire morte MEM1 et une mémoire flash non volatile MF1. De tels moyens sont connus en soi et ne sont pas décrits plus en détail ici. La mémoire morte constitue un support d'enregistrement conforme à l'invention, lisible par le processeur PROC1 et sur lequel est enregistré ici un programme d'ordinateur PG1 conforme à l'invention, ce programme comportant des instructions pour mettre en œuvre les étapes du procédé de transmission d'une notification tel que décrit précédemment, lorsque le programme est exécuté par le processeur PROC1. A l'initialisation, les instructions de code du programme d'ordinateur PG1 sont par exemple chargées dans une mémoire avant d'être exécutées par le processeur PROC1. Le processeur PROC1 de l'unité de traitement UT1 met notamment en œuvre les étapes du procédé de transmission d'une notification selon l'un quelconque des modes particuliers de réalisation décrits en relation avec les figures 1 et 3, selon les instructions du programme d'ordinateur PG1.

Le dispositif S comprend également un module de réception RECV1 apte à recevoir des communications via par exemple un réseau IP. Le module de réception RECV1 est par exemple utilisé pour recevoir des notifications en provenance d'un serveur applicatif comme par exemple le serveur 101. Le dispositif S comprend en outre un module d'émission SND1 apte à émettre des communications via par exemple un réseau IP. Le module d'émission SND1 est par exemple utilisé pour émettre à destination d'une application d'un terminal tel que le terminal 105 la notification reçue via le module RECV1.

Le dispositif S comprend de plus un module d'obtention OBT1 apte à obtenir depuis par exemple un espace de stockage tel qu'une mémoire interne ou une base de données, une ou plusieurs données de connectivités d'un dispositif comme le serveur 104 ou le terminal 105. La ou les données de connectivité sont obtenues en fonction d'un ou plusieurs identifiants contenus dans la notification. Les identifiants peuvent être des identifiants d'un terminal comme le terminal 105 et/ou de serveur comme le serveur 104.

Le dispositif S comprend également un module DETER1 apte à déterminer en fonction des données de connectivités obtenues, un paramètre d'accès à un dispositif de communication. Le paramètre d'accès est par exemple un paramètre permettant d'établir une communication, tel qu'une une adresse IP, avec un dispositif de communication comme par exemple le serveur 106.

Selon un mode particulier de réalisation, le dispositif S comprend un espace de stockage apte à stoker les notifications reçues via le module RECV1.

La figure 3 illustre des étapes du procédé de transmission d'une notification selon un mode particulier de réalisation de l'invention. La figure 3 utilise le même environnement que celui décrit à l'appui de la figure 1.

Au cours d'une première étape E10, le serveur applicatif 101 envoie une notification à destination d'une application exécutée sur le terminal 105 ou à destination d'un élément de sécurité utilisé par le terminal 105. A l'étape E20 le serveur 102 qui exécute le procédé de transmission d'une notification reçoit la notification qui peut comprendre un ou plusieurs identifiants du terminal 105. Cet identifiant est par exemple le MSISDN associé à la carte SIM/eSIM du terminal ou l'IMEI du terminal ou une adresse IP/MAC/etc. La notification peut également comprendre un ou plusieurs identifiants de l'application destinataire.

Selon un mode particulier de réalisation, le serveur 101 peut, sur la base du ou des identifiants du terminal, déterminer l'opérateur de télécommunications en charge des communications avec le terminal 105 par exemple en consultant une base de données de portabilité de numéros téléphoniques MSISDN (non représentée). Une fois l'opérateur de télécommunications identifié, le serveur 101 va ensuite déterminer le serveur 102 de l'opérateur de télécommunications à contacter.

A l'étape E21, le procédé va émettre une requête à destination d'une base de données 103 pour obtenir une ou plusieurs données de connectivité. Concrètement le procédé va par exemple demander l'exécution d'une requête SQL (E31) au niveau de la base de données 103 avec pour clef de recherche un ou plusieurs identifiants du terminal 105 récupérés dans la notification.

A noter que dans le cas où le serveur 102 ne serait pas un serveur opéré par l'opérateur de télécommunications du réseau 100 et ne serait donc pas un serveur situé au sein du réseau 100, le procédé peut également, sur la base du ou des identifiants du terminal contenus dans la notification, déterminer l'opérateur de télécommunications en charge des communications avec le terminal 105. Une fois l'opérateur de télécommunications identifié, le serveur 102 va ensuite déterminer la base de données 103 de l'opérateur de télécommunications à consulter.

A noter que le procédé peut également, sur la base des identifiants du terminal 105 contenus dans la notification, générer un nouvel identifiant pour effectuer la recherche, par exemple en réalisant une concaténation de plusieurs identifiants. Le procédé peut également obtenir, en fonction d'un ou des identifiants contenus dans la notification, par exemple depuis un espace de stockage ou via une requête réseau, un nouvel identifiant pour effectuer la recherche. Ainsi, la notification peut par exemple comprendre l'adresse MAC du terminal 105 qui va permettre d'obtenir le MSISDN du terminal 105 qui sera ensuite utilisé pour rechercher les données de connectivité dans la base de données 103.

Alternativement les données de connectivité peuvent également être obtenues depuis un espace de stockage du serveur 102 comme par exemple une mémoire ou via une requête réseau.

Alternativement ou cumulativement, lors de l'étape E21, le procédé va par exemple demander l'exécution d'une requête SQL (E31) au niveau de la base de données 103 avec pour clef de recherche un ou plusieurs identifiants du serveur 104.

Alternativement ou cumulativement, lors de l'étape E21, le procédé va par exemple demander l'exécution d'une requête SQL (E31) au niveau de la base de données 103 avec pour clef de recherche un ou plusieurs identifiants de l'application destinataire de la notification. Cela permet par exemple de choisir une connectivité parmi une pluralité de connectivités disponibles sur le terminal 105 en fonction de l'application destinataire de la notification. Il est ainsi possible de choisir la connectivité la plus adaptée pour la transmission de la notification comme par exemple la plus rapide ou la moins énergivore.

A l'étape E32 les données de connectivité sont envoyées par la base de données 103 et reçus par le serveur 102 lors de l'étape E22.

Les données de connectivité sont par exemple récupérées sous la forme d'une liste, ordonnée ou non, recensant tout ou partie des interfaces/services de communications du terminal 105 et/ou du serveur 104 avec leur statut (actif/non actif). Concrètement ces données peuvent être des adresses IP, des modes de communication particuliers comme par exemple USSD/SMS/téléphonie/etc. ou tout type d'informations relatives à l'établissement d'une communication avec le terminal 105 et/ou le serveur 104.

Selon un mode particulier de réalisation de l'invention, ces données peuvent également comprendre des droits d'utilisation des interfaces/services de communication par le terminal 105. En effet, le détenteur du terminal 105 peut être autorisé ou non par l'opérateur de télécommunications à utiliser une interface/service de communication de son terminal (105). Ces droits sont par exemple liés à l'offre commerciale souscrite par le détenteur de l'élément de sécurité utilisé par le terminal 105 auprès de l'opérateur de télécommunications qui opère le réseau de télécommunications 100.

A l'étape E22, les données de connectivité sont traitées par le procédé de transmission d'une notification. Le procédé va par exemple vérifier que le serveur 104 est joignable et qu'au moins une de ses connectivité est active. Dans ce cas le procédé peut décider d'envoyer (E25) la notification au serveur 104. Le serveur 104 est par exemple une plateforme de notifications Apple (APNS) ou Google (GCM/FCM). Ces plateformes utilisent un identifiant/Token contenu dans la notification et attribué à l'application lors de son téléchargement sur le terminal 105 pour identifier le terminal 105 et l'application destinataire. Bien entendu l'identifiant/Token a préalablement été transmis par l'application exécutée sur le terminal 105 au serveur applicatif 101.

Ce Token est mémorisé par exemple dans une base de données accessible depuis le serveur 104 avec le contexte courant de connectivité du terminal 105 tel que son adresse IP. Dans le cas où une nouvelle adresse IP est attribuée au terminal 105 alors l'OS du terminal ou une application du terminal 105 renvoie la nouvelle adresse au serveur 104.

A noter que dans le cas où l'environnement de mise en œuvre est composé de plusieurs serveurs de notifications, par exemple un serveur 104 de type APNS (Apple) et un serveur 104' (non représenté ici) de type GCM/FCM (Google), le procédé de transmission d'une notification peut comprendre une étape supplémentaire (non représentée) de détermination du serveur compatible avec le terminal 105. En effet, les serveurs de notifications sont adossés à un écosystème particulier et ne sont pas interopérables. Un server de type APNS ne peut notifier qu'un terminal faisant partie de l'environnement Apple (ex : un terminal iOS) et un serveur de type GCM/FCM qu'un terminal faisant partie de l'environnement Google (Ex : un terminal Android). Cette étape de détermination peut par exemple se faire sur la base de l'IMEI contenu dans la notification. Le serveur 102 va en déduire le type de terminal et par conséquent le serveur compatible.

A l'étape E25, la notification est envoyée par le serveur 102 puis reçue par le serveur 104 à l'étape E55. Le serveur 104 va ensuite grâce au Token contenu dans la notification, identifier le terminal et l'application destinataires. La notification est ensuite transmise au terminal 105 lors de l'étape E56 puis reçue par le terminal 105 à l'étape E66. Une fois reçue, la notification est interceptée par l'OS du terminal et/ou une application exécutée par le terminal comme par exemple l'application Google Play Store. L'OS/application Store du terminal va ensuite utiliser une API de notification locale au terminal pour notifier l'utilisateur. Cette notification peut se faire sous plusieurs formes comme par exemple l'affichage d'une fenêtre dans la partie haute du terminal avec un texte contenu dans la notification et/ou des boutons d'action et/ou l'affichage en surimpression d'un élément graphique sur l'icône de l'application destinataire de la notification et/ou la diffusion d'un son ou d'une vibration au niveau du terminal, etc.

A l'issue de l'étape E22 le procédé peut également décider de ne pas envoyer la notification au serveur 104 par exemple parce que les données de connectivité indiquent que celui-ci n'est pas joignable, c'est-à-dire qu'aucune de ses interfaces de communication n'est connectée ou active ou parce que le procédé priorise l'envoi de la notification au terminal 105 via le serveur 106. Le procédé de notification va alors traiter les données de connectivité relatives au terminal 105. Le procédé va par exemple extraire de la ou des données de connectivité les informations concernant les modes de communication disponibles sur le terminal 105 et ainsi connaitre l'ensemble des interfaces/services de communication (SMS, USSD, MMS, IP, Téléphonie, RCS, etc...) du terminal 105 avec leurs statuts (active/non active/etc.). Les données de connectivité peuvent également comprendre un indicateur de qualité pour chaque interface de communication du terminal 105 comme par exemple le niveau de signal radio minimal requis, un taux d'échec de connexion, la latence constatée avant d'obtenir un accusé de bonne réception d'une notification, etc...

A noter que le SDM (Subscribers Data Management HLR (Home Locator Register)/HSS(Home Subscribers Server)) présent dans le réseau de communications 100 (non représenté) de l'opérateur connait l'ensemble des interfaces/services de communication disponibles pour chaque terminal connecté au réseau 100 via l'élément de sécurité du terminal.

Le procédé va ensuite choisir une interface/service de communication du terminal 105 par exemple en fonction du statut et/ou d'un ordre de priorité à utiliser et/ou d'un indicateur de qualité pour communiquer et transmettre la notification au terminal 105. Une fois l'interface de communication sélectionnée, le procédé va ensuite en déduire/déterminer un paramètre d'accès à un dispositif de communication afin de communiquer avec le terminal 105 via l'interface de communication choisie. Par exemple, si le procédé détermine que l'interface de communication est une interface/service de type SMS, alors le paramètre d'accès sera par exemple l'adresse IP ou FQDN (Fully Qualified Domain Name) ou URI (Uniform Resource Identifier) d'une plateforme SMS-C représentée ici par le serveur 106. Les paramètres d'accès sont par exemple stockés dans un espace de stockage numérique tel qu'une base de données (103) ou un fichier situé sur le serveur 102. Le procédé va ensuite émettre à l'étape E23 la notification à destination du dispositif de communication tel que le serveur 106.

Selon un mode particulier de réalisation, dans le cas où le serveur 102 ne serait pas un serveur opéré par l'opérateur de télécommunications du réseau 100 et ne serait donc pas un serveur situé au sein du réseau 100, le procédé peut également sur la base du ou des identifiants du terminal contenus dans la notification, déterminer à l'étape E23 l'opérateur de télécommunications en charge des communications avec le terminal 105 par exemple en consultant une base de données de portabilité de numéros téléphoniques MSISDN (non représentée). Une fois l'opérateur de télécommunications identifié, le serveur 102 va ensuite déterminer le dispositif de communication de l'opérateur de télécommunications à contacter (e.g le serveur 106).

La notification est ensuite reçue à l'étape E43 par le dispositif de communication puis traitée afin d'aiguiller/envoyer la notification vers le terminal 105. Pour ce faire, le dispositif peut récupérer un identifiant du terminal 105 par exemple contenu dans la notification tel que le MSISDN ou IMSI puis générer un message dans un format adapté et l'envoyer (E44) au terminal 105. La notification est ensuite reçue par le terminal 105 à l'étape E64.

Une fois la notification reçue, par exemple sur l'interface radio mobile du terminal, les pilotes logiciels des composants matériels du terminal assurant les services de télécommunications radio avec le réseau de l'opérateur mobile vont réceptionner la notification qui peut par exemple être un message de signalisation radio (couches basses/matérielles du modèle OSI) ou bien un message de plus haut niveau par exemple de type TCP/IP ou NAS ou IMS. Ces composants / drivers / couches logiciels (middleware) ont la faculté de gérer différents modes de services téléphoniques, de messagerie, de code USSD/USSI ou de notification (par exemple un message de broadcast de type « Paging » pour rechercher un terminal mobile en mode repos dans une pluralité de cellules radio afin d'établir une communication unicast avec ce terminal ou bien un message de notification de type NAS (Network Access Stratum)) pour les besoins des applications de téléphonie (le mode circuit / le mode paquet avec la VoLTE (Voice over LTE) / la VoWiFi (Voice over WiFi) / la VoNR (Voice over New Radio) / etc.), de messagerie (le Short Message Service over Circuit Switch / le Short Message Service over GS Interface / le Short Message Service over Mobility Management Entity / le Short Message Service over IP / RCS en mode IP), de traitement des codes USSD/USSI ou des mécanismes de notification par signalisation NAS (Network Access Stratum) du terminal 105. En effet, ces types d'applications ont des privilèges particuliers au niveau de l'OS du terminal et disposent d'un accès permanent aux différents protocoles bas niveau des réseaux mobiles cellulaire/WiFi (par exemple le protocole NAS, la pile protocolaire IMS SIP,...) ce qui permet de les réveiller et/ou de les activer automatiquement sur évènement entrant (message de signalisation) sans avoir besoin du mécanisme classique de notification des applications. La notification est donc réceptionnée par l'une de ces applications en fonction de l'interface/service de communication et du dispositif de communication choisis. Une fois reçue, la notification est ensuite traitée par exemple par une application de messages (SMS) ou une application de téléphonie du terminal. Concrètement le traitement peut par exemple comprendre la recherche d'un élément/paramètre particulier dans la notification indiquant que celle-ci est destinée à être transmise à une autre application. Dans le cas d'une application de messages (SMS) ou de téléphonie, le traitement peut par exemple comprendre la recherche dans la notification d'un numéro appelant émetteur prédéfini préalablement inséré par le dispositif de communication/ serveur 106 ou d'un identifiant d'application. S'il s'agit bien d'une notification destinée à une application à notifier, c'est-à-dire qu'un numéro appelant émetteur prédéfini et/ou un identifiant d'application est bien présent dans la notification, alors le comportement de l'application qui effectue le traitement est modifié afin de ne pas traiter la notification comme un message/SMS ou un appel classique. Par exemple, les journaux d'appels ou les interfaces utilisateurs de l'application de messages (SMS) ou de téléphonie ne sont alors pas mis à jour de façon à ce que ce traitement reste invisible de l'utilisateur.

L'application de messages (SMS) ou de téléphonie va ensuite utiliser une API de notification locale au terminal 105 pour par exemple notifier l'utilisateur via l'application destinataire de la notification. Cette notification peut se faire sous plusieurs formes comme par exemple l'affichage d'une fenêtre dans la partie haute du terminal avec un texte contenu dans la notification et/ou des boutons d'action et/ou l'affichage en surimpression d'un élément graphique sur l'icône de l'application destinataire de la notification et/ou la diffusion d'un son ou d'une vibration au niveau du terminal, etc. L'application SMS ou de téléphonie peut également déterminer que l'application destinataire de la notification doit être réveillée et la réveiller en lui transmettant par exemple la notification reçue via une API locale au terminal 105, par exemple via les mécanismes de Deeplink (lien spécifique visant à renvoyer vers une page ou un produit précis, au lieu de rediriger uniquement vers la page d'accueil de l'application) ou Applink fournis par les systèmes d'exploitation des terminaux mobile.

Selon un mode de réalisation particulier, la notification peut être réceptionnée au niveau d'une application exécutée sur l'élément de sécurité (Applet ou Cardlet). L'application a ensuite la possibilité de notifier directement l'utilisateur du terminal 105 via par exemple une API de type SIM Toolkit. L'application peut également déterminer une application à réveiller en fonction d'un identifiant de l'application destinataire contenu dans la notification et la réveiller en lui transmettant par exemple la notification reçue.

Selon un mode de mise en œuvre particulier de l'invention l'identifiant de l'application contenu dans la notification peut comprendre un lien permettant d'accéder à un contenu spécifique de l'application comme par exemple une rubrique ou un élément particulier.

Selon un mode de mise en œuvre particulier de l'invention l'identifiant de l'application contenu dans la notification peut comprendre un lien permettant le téléchargement par l'application d'une donnée/information depuis un serveur situé dans le réseau. Concrètement, lors de l'étape E20 le procédé peut considérer que la notification comprend un contenu qui est par exemple trop volumineux et décider de le stocker au niveau d'un espace de stockage numérique tel que la base de données 103. Lors de l'étape E23 la notification envoyée est préalablement modifiée par le procédé de transmission afin de supprimer le contenu volumineux et d'y insérer un identifiant unique de la notification par exemple sous la forme d'un lien de type URL qui permettra à l'application de communication recevant la notification ou l'application destinataire de télécharger le contenu originel. A noter que l'identifiant de la notification peut également être compris dans l'identifiant de l'application sous la forme d'un lien de téléchargement.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de transmission d'une notification à destination d'une application d'un terminal mobile, ledit terminal mobile disposant d'un élément matériel sécurisé permettant l'authentification dudit terminal mobile au niveau d'un réseau de télécommunication, le procédé étant **caractérisé en ce qu'**il comprend :
- une étape de réception de ladite notification en provenance d'un serveur applicatif, ladite notification comprenant au moins un identifiant dudit terminal mobile et au moins un identifiant de ladite application ;
- une étape d'obtention, en fonction dudit au moins un identifiant dudit terminal mobile, d'au moins une donnée de connectivité comprenant un statut de connexion d'au moins une interface de communication dudit terminal mobile à un instant donnée ;
- une étape de détermination, en fonction de ladite au moins une donnée de connectivité obtenue, d'un paramètre d'accès à au moins un dispositif de communication apte à communiquer avec ledit terminal mobile ;
- une étape de transmission de ladite notification audit dispositif de communication accessible via ledit paramètre d'accès.

2. Procédé selon la revendication 1 **caractérisé en ce que** l'étape de transmission comprend une sous étape de routage de ladite notification par ledit dispositif de communication vers ladite application dudit terminal mobile identifié via ledit au moins un identifiant dudit terminal mobile.

3. Procédé selon la revendication 1 **caractérisé en ce que** l'étape d'obtention est également fonction dudit identifiant de ladite application.

4. Procédé selon la revendication 1 **caractérisé en ce que** l'étape de réception est suivi d'une étape de stockage de ladite notification.

5. Procédé selon la revendication 1 **caractérisé en ce que** ladite au moins une donnée de connectivité comprend un indicateur de priorité associé à ladite au moins une interface de communication dudit terminal mobile.

6. Procédé selon la revendication 1 **caractérisé en ce que** ladite au moins une donnée de connectivité comprend un indicateur de qualité associé à ladite au moins une interface de communication dudit terminal mobile.

7. Procédé selon la revendication 1 **caractérisé en ce que** l'étape de détermination est également fonction d'une donnée de droits d'accès associée à l'élément matériel sécurisé.

8. Procédé selon la revendication 1 **caractérisé en ce que** ladite au moins une donnée de connectivité comprend un statut de connexion d'au moins un serveur situé dans le réseau.

9. Dispositif de transmission d'une notification à destination d'une application d'un terminal mobile, ledit terminal mobile disposant d'un élément matériel sécurisé permettant l'authentification dudit terminal mobile au niveau d'un réseau de télécommunication, ledit dispositif étant **caractérisé en ce qu'**il comprend :
- un module de réception de ladite notification en provenance d'un serveur applicatif, ladite notification comprenant au moins un identifiant dudit terminal mobile et au moins un identifiant de ladite application ;
- un module d'obtention, en fonction dudit premier identifiant dudit terminal mobile, d'au moins une donnée de connectivité comprenant un statut de connexion d'au moins une interface de communication dudit terminal mobile à un instant donnée ;
- un module de détermination, en fonction de ladite au moins une donnée de connectivité obtenue, d'un paramètre d'accès à au moins un dispositif de communication apte à communiquer avec ledit terminal mobile ;
- un module de transmission de ladite notification audit dispositif de communication via ledit paramètre d'accès déterminé.

10. Dispositif de transmission d'une notification selon la revendication 9 **caractérisé en ce qu'**il inclut ledit dispositif de communication.

11. Système de transmission d'une notification à destination d'une application d'un terminal mobile, ledit terminal mobile disposant d'un élément matériel sécurisé permettant l'authentification dudit terminal mobile au niveau d'un réseau de télécommunication **caractérisé en ce qu'**il comprend :
- un premier dispositif comprenant des moyens pour recevoir ladite notification en provenance d'un serveur applicatif, ladite notification comprenant au moins un identifiant dudit terminal mobile et au moins un identifiant de ladite application, obtenir au moins une donnée de connectivité en fonction dudit identifiant dudit terminal mobile, déterminer un paramètre d'accès pour accéder à au moins un dispositif de communication en fonction de ladite au moins une donnée de connectivité obtenue et transmettre ladite notification audit dispositif de communication ;
- un deuxième dispositif, dit dispositif de communication, accessible via ledit paramètre d'accès comprenant des moyens pour recevoir ladite notification et la router vers ledit terminal mobile en fonction dudit au moins un identifiant dudit terminal mobile.

12. Système de transmission d'une notification selon la revendication 11 **caractérisé en ce que** ledit dispositif de communication comprend un serveur d'un opérateur de télécommunication apte à communiquer avec ledit terminal mobile.

13. Programme d'ordinateur comportant des instructions pour la mise en œuvre du procédé selon l'une quelconque des revendications 1 à 8, lorsque le programme est exécuté par un processeur.

## Patentansprüche

1. Verfahren zur Übertragung einer Benachrichtigung an eine Anwendung eines mobilen Endgerätes, wobei das mobile Endgerät über ein sicheres Hardwareelement verfügt, das die Authentifizierung des mobilen Endgerätes an einem Telekommunikationsnetz ermöglicht, wobei das Verfahren **dadurch gekennzeichnet ist, dass** es umfasst:
- einen Schritt des Empfangs der von einem Anwendungsserver kommenden Benachrichtigung, wobei die Benachrichtigung mindestens eine Kennung des mobilen Endgerätes und mindestens eine Kennung der Anwendung umfasst;
- einen Schritt der Gewinnung, in Abhängigkeit von der mindestens einen Kennung des mobilen Endgerätes, mindestens eines Konnektivitätsdatenelements, das einen Verbindungsstatus mindestens einer Kommunikationsschnittstelle des mobilen Endgerätes zu einem gegebenen Zeitpunkt umfasst;
- einen Schritt der Bestimmung, in Abhängigkeit von dem mindestens einen gewonnenen Konnektivitätsdatenelement, eines Zugangsparameters zu mindestens einer Kommunikationsvorrichtung, die geeignet ist, mit dem mobilen Endgerät zu kommunizieren;
- einen Schritt der Übertragung der Benachrichtigung an die Kommunikationsvorrichtung, die über den Zugangsparameter zugänglich ist.

2. Verfahren nach Anspruch 1, **dadurch gekennzeichnet, dass** der Schritt der Übertragung einen Teilschritt des Routings der Benachrichtigung durch die Kommunikationsvorrichtung zu der Anwendung des mobilen Endgerätes umfasst, das über die mindestens eine Kennung des mobilen Endgerätes identifiziert wurde.

3. Verfahren nach Anspruch 1, **dadurch gekennzeichnet, dass** der Schritt der Gewinnung auch von der Kennung der Anwendung abhängig ist.

4. Verfahren nach Anspruch 1, **dadurch gekennzeichnet, dass** auf den Schritt des Empfangs ein Schritt der Speicherung der Benachrichtigung folgt.

5. Verfahren nach Anspruch 1, **dadurch gekennzeichnet, dass** das mindestens eine Konnektivitätsdatenelement einen Prioritätsindikator umfasst, welcher der mindestens einen Kommunikationsschnittstelle des mobilen Endgerätes zugeordnet ist.

6. Verfahren nach Anspruch 1, **dadurch gekennzeichnet, dass** das mindestens eine Konnektivitätsdatenelement einen Qualitätsindikator umfasst, welcher der mindestens einen Kommunikationsschnittstelle des mobilen Endgerätes zugeordnet ist.

7. Verfahren nach Anspruch 1, **dadurch gekennzeichnet, dass** der Schritt der Bestimmung auch von einem Zugangsrechte-Datenelement abhängt, das dem sicheren Hardwareelement zugeordnet ist.

8. Verfahren nach Anspruch 1, **dadurch gekennzeichnet, dass** das mindestens eine Konnektivitätsdatenelement einen Verbindungsstatus mindestens eines Servers umfasst, der sich in dem Netz befindet.

9. Vorrichtung zur Übertragung einer Benachrichtigung an eine Anwendung eines mobilen Endgerätes, wobei das mobile Endgerät über ein sicheres Hardwareelement verfügt, das die Authentifizierung des mobilen Endgerätes an einem Telekommunikationsnetz ermöglicht, wobei die Vorrichtung **dadurch gekennzeichnet ist, dass** sie umfasst:
- ein Modul zum Empfang der von einem Anwendungsserver kommenden Benachrichtigung, wobei die Benachrichtigung mindestens eine Kennung des mobilen Endgerätes und mindestens eine Kennung der Anwendung umfasst;
- ein Modul zur Gewinnung, in Abhängigkeit von der ersten Kennung des mobilen Endgerätes, mindestens eines Konnektivitätsdatenelements, das einen Verbindungsstatus mindestens einer Kommunikationsschnittstelle des mobilen Endgerätes zu einem gegebenen Zeitpunkt umfasst;
- ein Modul zur Bestimmung, in Abhängigkeit von dem mindestens einen gewonnenen Konnektivitätsdatenelement, eines Zugangsparameters zu mindestens einer Kommunikationsvorrichtung, die geeignet ist, mit dem mobilen Endgerät zu kommunizieren;
- ein Modul zur Übertragung der Benachrichtigung an die Kommunikationsvorrichtung über den bestimmten Zugangsparameter.

10. Vorrichtung zur Übertragung einer Benachrichtigung nach Anspruch 9, **dadurch gekennzeichnet, dass** sie die Kommunikationsvorrichtung enthält.

11. System zur Übertragung einer Benachrichtigung an eine Anwendung eines mobilen Endgerätes, wobei das mobile Endgerät über ein sicheres Hardwareelement verfügt, das die Authentifizierung des mobilen Endgerätes an einem Telekommunikationsnetz ermöglicht, **dadurch gekennzeichnet, dass** es umfasst:
- eine erste Vorrichtung, die Mittel umfasst zum Empfangen der von einem Anwendungsserver kommenden Benachrichtigung, wobei die Benachrichtigung mindestens eine Kennung des mobilen Endgerätes und mindestens eine Kennung der Anwendung umfasst, zum Gewinnen mindestens eines Konnektivitätsdatenelements in Abhängigkeit von der Kennung des mobilen Endgerätes, zum Bestimmen eines Zugangsparameters zum Zugreifen auf mindestens eine Kommunikationsvorrichtung in Abhängigkeit von dem mindestens einen gewonnenen Konnektivitätsdatenelement und zum Übertragen der Benachrichtigung an die Kommunikationsvorrichtung;
- eine zweite Vorrichtung, Kommunikationsvorrichtung genannt, die über den Zugangsparameter zugänglich ist und Mittel umfasst, um die Benachrichtigung zu empfangen und sie in Abhängigkeit von der mindestens einen Kennung des mobilen Endgerätes zu dem mobilen Endgerät zu routen.

12. System zur Übertragung einer Benachrichtigung nach Anspruch 11, **dadurch gekennzeichnet, dass** die Kommunikationsvorrichtung einen Server eines Telekommunikationsanbieters umfasst, der geeignet ist, mit dem mobilen Endgerät zu kommunizieren.

13. Computerprogramm, welches Anweisungen zur Durchführung des Verfahrens nach einem der Ansprüche 1 bis 8, wenn das Programm von einem Prozessor ausgeführt wird, umfasst.

## Claims

1. Method for transmitting a notification to an application of a mobile terminal, said mobile terminal having a secure hardware element allowing the authentication of said mobile terminal in a telecommunication network, the method being **characterized in that** it comprises:
- a step of receiving said notification from an application server, said notification comprising at least one identifier of said mobile terminal and at least one identifier of said application;
- a step of obtaining, depending on said at least one identifier of said mobile terminal, at least one connectivity datum comprising a connection state of at least one communication interface of said mobile terminal at a given time;
- a step of determining, depending on said at least one obtained connectivity datum, an access parameter for access to at least one communication device able to communicate with said mobile terminal;
- a step of transmitting said notification to said communication device accessible via said access parameter.

2. Method according to Claim 1, **characterized in that** the transmission step comprises a substep of routing said notification by said communication device to said application of said mobile terminal identified via said at least one identifier of said mobile terminal.

3. Method according to Claim 1, **characterized in that** the obtaining step also depends on said identifier of said application.

4. Method according to Claim 1, **characterized in that** the reception step is followed by a step of storing said notification.

5. Method according to Claim 1, **characterized in that** said at least one connectivity datum comprises a priority indicator associated with said at least one communication interface of said mobile terminal.

6. Method according to Claim 1, **characterized in that** said at least one connectivity datum comprises a quality indicator associated with said at least one communication interface of said mobile terminal.

7. Method according to Claim 1, **characterized in that** the determination step also depends on an access rights datum associated with the secure hardware element.

8. Method according to Claim 1, **characterized in that** said at least one connectivity datum comprises a connection state of at least one server located in the network.

9. Device for transmitting a notification to an application of a mobile terminal, said mobile terminal having a secure hardware element allowing the authentication of said mobile terminal in a telecommunication network, said device being **characterized in that** it comprises:
- a module for receiving said notification from an application server, said notification comprising at least one identifier of said mobile terminal and at least one identifier of said application;
- a module for obtaining, depending on said first identifier of said mobile terminal, at least one connectivity datum comprising a connection state of at least one communication interface of said mobile terminal at a given time;
- a module for determining, depending on said at least one obtained connectivity datum, an access parameter for access to at least one communication device able to communicate with said mobile terminal;
- a module for transmitting said notification to said communication device via said determined access parameter.

10. Device for transmitting a notification according to Claim 9, **characterized in that** it includes said communication device.

11. System for transmitting a notification to an application of a mobile terminal, said mobile terminal having a secure hardware element allowing the authentication of said mobile terminal in a telecommunication network, **characterized in that** it comprises:
- a first device comprising means for receiving said notification from an application server, said notification comprising at least one identifier of said mobile terminal and at least one identifier of said application, obtaining at least one connectivity datum depending on said identifier of said mobile terminal, determining an access parameter for access to at least one communication device depending on said at least one obtained connectivity datum, and transmitting said notification to said communication device;
- a second device, called the communication device, accessible via said access parameter and comprising means for receiving said notification and routing it to said mobile terminal depending on said at least one identifier of said mobile terminal.

12. System for transmitting a notification according to Claim 11, **characterized in that** said communication device comprises a server of a telecommunication operator able to communicate with said mobile terminal.

13. Computer program comprising instructions for carrying out the method according to any one of Claims 1 to 8, when the program is executed by a processor.
